# EUROPÄISCHE PATENTANMELDUNG

(11) **EP 3 734 898 A1**
(43) Veröffentlichungstag der Anmeldung: **04.11.2020**
(21) Anmeldenummer: 19171541.6
(22) Anmeldetag: 29.04.2019
(51) Int. Cl.: H04L 9/00, G06F 21/57

(54) **VERFAHREN UND PROZESSOR ZUM SICHEREN PROZESSORSTART**

(71) Anmelder: Siemens Aktiengesellschaft, 80333 München (DE)
(72) Erfinder: Sel, Tolga, 81379 München (DE); Zeschg, Thomas, 81543 München (DE)

(57) **Zusammenfassung**

Die Erfindung betrifft ein Verfahren und einen Prozessor, der durch seinen spezifischen Aufbau eine Zeitverzögerung beim Starten des Prozessors nutzt, um Seitenkanalangriffe zu erschweren.

## Beschreibung

Die Erfindung bezieht sich auf einen Prozessor und ein Verfahren zum sicheren Prozessorstart, wobei beispielsweise Seitenkanalangriffe erschwert werden.

Aufgabe der Erfindung ist es zu bestehenden Verfahren eine Alternative bereitzustellen.

Nachfolgend werden Aspekte der Erfindung erläutert.

Gemäß einem ersten Aspekt betrifft die Erfindung einen programmierbaren Prozessor (P), beispielsweise ein FPGA, aufweisend:
- ein Energiespeicher (110);
- ein Konfigurationsmodul (120), wobei
   ∘ das Konfigurationsmodul (120) dazu eingerichtet ist eine Konfiguration zum Laden und/oder zum Entladen des Energiespeichers (110) zu speichern und/oder zu laden;
- ein Startsteuerungsmodul (130), wobei
   ∘ das Startsteuerungsmodul (130) dazu eingerichtet ist die gespeicherte Energie des Energiespeichers (110) bei einem Start des programmierbaren Prozessors (P) zu bestimmen,
   ∘ das Startsteuerungsmodul (130) die bestimmte gespeicherte Energie (U_C) mit einem vorgegebenen Schwellwert (U_S) vergleicht und anhand des Vergleichens ein Prüfergebnis ermittelt,
   ∘ abhängig von dem Prüfergebnis der Start des programmierbaren Prozessors (P) um eine Verzögerungszeit verzögert wird.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor oder programmierbaren Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einem "Modul" kann im Zusammenhang mit der Erfindung beispielsweise eine Schaltung des programmierbaren Prozessors und/oder ein Speicher des programmierbaren Prozessors zum Speichern von Programmbefehlen verstanden werden. Beispielsweise ist die Schaltung speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einem Speicher gespeichert ist) verstanden werden.

Die Erfindung ist dahingehend vorteilhaft, um beispielsweise eine zusätzliche Härtung gegen Seitenkanalangriffe, die z. B. in Kombination mit bekannten implementierungsbasierten Härtungsmaßnahmen Seitenkanalangriffe auf z. B. FPGA Bitstream Entschlüsselungen signifikant erschwert.
Indem beispielsweise durch eine Zeitmessung z. B. durch einen im programmierbaren Prozessor integrierten Kondensator die Zeit zwischen aufeinanderfolgenden Neustarts verlängert wird, fällt es einem Angreifer deutlich schwerer eine hinreichende Menge an Messdaten aufzunehmen, um eine Korrelation zu einem privaten Schlüssel herzustellen.

Zusätzlich können beispielsweise auch zu viele aufeinanderfolgende Neustarts erkannt werden und mit einer Löschung des Schlüssels reagiert werden.

Zusätzlich hat beispielsweise die beschriebene Verzögerung eines Neustarts keine relevanten Nachteile für den Benutzer, da der Prozessor oder ein Gerät (z. B. ein Feldgerät), das den Prozessor umfasst, im operativen Einsatz nur sehr selten neu gestartet wird bzw. nicht mehrere Male hintereinander neugestartet wird und wenn es neu gestartet wird, dann ist die zeitliche "Verlängerung" des Neustarts auch irrelevant.

Bei weiteren Ausführungsformen des programmierbaren Prozessors umfasst das Prüfergebnis die Differenz zwischen der bestimmten gespeicherten Energie (U_C) und des vorgegebenen Schwellwertes (U_S).

Bei weiteren Ausführungsformen des programmierbaren Prozessors umfasst der Energiespeicher (110) einen Kondensator und einen Widerstand. Bei weiteren Ausführungsformen des programmierbaren Prozessors umfasst der Energiespeicher (110) eine Batterie und einen Widerstand. Bei weiteren Ausführungsformen des programmierbaren Prozessors umfasst der Energiespeicher (110) einen Kondensator und/oder einen oder mehrere Transistoren.

Bei weiteren Ausführungsformen des programmierbaren Prozessors ist mittels des Konfigurationsmoduls die Konfiguration festlegbar.

Der programmierbare Prozessor ist dahingehend vorteilhaft, um beispielsweise die Konfiguration für den programmierbaren Prozessor zu aktualisieren und an neue Betriebsbedingungen anzupassen.

Bei weiteren Ausführungsformen des programmierbaren Prozessors gibt die Konfiguration eine vorgegebene Anzahl von Starts des programmierbaren Prozessors (P) vor, die den vorgegebenen Schwellwert (U_S) überschreiten dürfen, wobei die vorgegebene Anzahl der Starts beispielsweise direkt hintereinander ausgeführte Starts des programmierbaren Prozessors (P) sind und wobei beispielsweise bei einem Überschreiten der vorgegebenen Anzahl der Starts vorgegebene Steuerbefehle ausgeführt werden.

Bei weiteren Ausführungsformen des programmierbaren Prozessors löschen die Steuerbefehle vorgegebene Daten des programmierbaren Prozessors (P). Alternativ oder zusätzlich unterbrechen die Steuerbefehle den Start des programmierbaren Prozessors (P). Alternativ oder zusätzlich stellen die Steuerbefehle einen Fehlercode bereit.

Dies ist dahingehend vorteilhaft, um beispielsweise auch zu viele aufeinanderfolgende Neustarts zu erkennen und mit einer Löschung des Schlüssels zu reagieren.

Zusätzlich hat beispielsweise die beschriebene Verzögerung eines Neustarts keine relevanten Nachteile für den Benutzer, da der Prozessor oder ein Gerät (z. B. ein Feldgerät), das den Prozessor umfasst, im operativen Einsatz nur sehr selten neu gestartet wird bzw. nicht mehrere Male hintereinander neu gestartet wird und wenn es neu gestartet wird, dann ist die zeitliche "Verlängerung" des Neustarts auch irrelevant.

Bei weiteren Ausführungsformen des programmierbaren Prozessors gibt die Konfiguration vor, wie hoch die Verzögerungszeit ist, und/oder die Konfiguration gibt beispielsweise vor, wie hoch die Verzögerungszeit abhängig von dem Prüfergebnis und/oder von der Differenz ist.

Bei weiteren Ausführungsformen des programmierbaren Prozessors wird die Konfiguration schreibgeschützt und/oder einmalig durch das Konfigurationsmodul (120) gespeichert.

Der programmierbare Prozessor ist dahingehend vorteilhaft, um beispielsweise zu verhindern, dass die Konfiguration geändert wird. Damit wird der Prozessor beispielsweise noch sicherer gemacht.

Bei weiteren Ausführungsformen des programmierbaren Prozessors ist die Verzögerungszeit ein fest vorgegebener Wert oder die Verzögerungszeit wird anhand eines Zufallswertes bestimmt.

Der programmierbare Prozessor ist dahingehend vorteilhaft, um beispielsweise den fest vorgegebenen Wert schnell bereitzustellen, ohne dass zusätzliche Berechnungen durchgeführt werden müssen. Die Verwendung des Zufallswertes ist dahingehend vorteilhaft, um die Verzögerungszeit durch Angreifer nicht vorhersehen zu können. Damit wird beispielsweise das Verfahren noch sicherer gemacht.

Bei weiteren Ausführungsformen des programmierbaren Prozessors wird der Zufallswert durch ein zufälliges Brennen von Schaltungen individuell für den programmierbaren Prozessor (P) bestimmt.

Bei weiteren Ausführungsformen des programmierbaren Prozessors gibt die Konfiguration ein Entladeprofil für eine Selbstentladung des Energiespeichers (110) vor, wobei die Selbstentladung beispielsweise nach einem Ausschalten des programmierbaren Prozessors (P) erfolgt.

Bei weiteren Ausführungsformen des programmierbaren Prozessors ist das Startsteuerungsmodul (130) dazu eingerichtet anhand der bestimmten gespeicherten Energie (U_C) und/oder des Entladeprofils einen Ausschaltzeitpunkt des programmierbaren Prozessors (P) zu berechnen, wobei das Startsteuerungsmodul (130) beispielsweise eine Startzeitdifferenz zwischen einem Einschaltzeitpunkt und dem Ausschaltzeitpunkt ermittelt und im Prüfergebnis speichert und wobei beispielsweise die Verzögerungszeit anhand der Startzeitdifferenz ermittelt wird, beispielsweise wenn die Startzeitdifferenz die Verzögerungszeit nicht einhält.

Gemäß einem weiteren Aspekt betrifft die Erfindung ein Computerimplementiertes Verfahren mit folgenden Verfahrensschritten:
- Speichern oder Laden (210) einer Konfiguration zum Laden und/oder zum Entladen eines Energiespeichers (110) eines programmierbaren Prozessors (P);
- Bestimmen (220) einer gespeicherten Energie des Energiespeichers (110) bei einem Start des programmierbaren Prozessors (P), wobei
   ∘ die bestimmte gespeicherte Energie (U_C) mit einem vorgegebenen Schwellwert (U_S) verglichen wird und anhand des Vergleichens ein Prüfergebnis ermittelt wird,
   ∘ abhängig von dem Prüfergebnis der Start des programmierbaren Prozessors (P) um eine Verzögerungszeit verzögert wird.

Bei weiteren Ausführungsformen des Verfahrens umfasst das Verfahren weitere Verfahrensschritte oder Merkmale, um die funktionalen Merkmale des programmierbaren Prozessors oder um weitere Merkmale des programmierbaren Prozessors bzw. dessen Ausführungsformen zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts das erfindungsgemäße Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass der genannte erfindungsgemäße programmierbare Prozessor erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehldatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es den erfindungsgemäßen programmierbaren Prozessor erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;
- Fig. 4: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

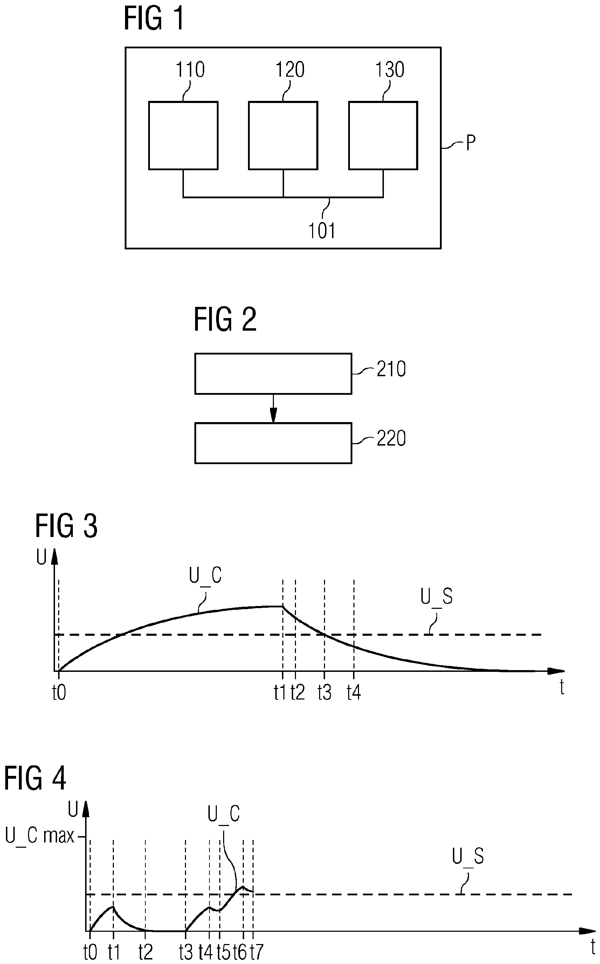

Fig. 1 zeigt dabei eine schematische Darstellung eines programmierbaren Prozessors P, wobei in Fig. 3 beispielhaft die Funktionsweise der Erfindung in Zusammenschau mit Fig. 1 dargestellt ist.

Der programmierbare Prozessor P, beispielsweise ein FPGA, umfasst beispielsweise einen Energiespeicher 110, ein Konfigurationsmodul 120 und ein Startsteuerungsmodul 130, die über einen Bus 101 miteinander kommunikativ verbunden sind.

Das Konfigurationsmodul 120 ist dazu eingerichtet eine Konfiguration zum Laden und/oder zum Entladen des Energiespeichers 110 bereitzustellen (z. B. zu speichern und/oder zu laden). Der programmierbare Prozessor P steuert z. B. das Laden des Energiespeichers 110 anhand der Konfiguration. Der Energiespeicher 110 wird dabei beispielsweise nach einem Ausschalten des programmierbaren Prozessors P anhand der vorgegebenen Konfiguration kontrolliert entladen.

Das Startsteuerungsmodul 130 ist dazu eingerichtet die gespeicherte Energie des Energiespeichers 110 bei einem Start des programmierbaren Prozessors P zu bestimmen oder zu berechnen (z. B. durch Messungen mittels eines Sensors des Energiespeichers). Das Startsteuerungsmodul 130 vergleicht die ausgelesene gespeicherte Energie U_C mit einem vorgegebenen Schwellwert U_S und anhand des Vergleichens wird ein Prüfergebnis ermittelt. Abhängig von dem Prüfergebnis wird der Start des programmierbaren Prozessors P um eine Verzögerungszeit verzögert.

Ein Gerät (beispielsweise ein Feldgerät oder ein Steuerungsgerät z. B. für eine Fertigungsanlage oder ein Energieverteilungsnetz) kann beispielsweise den programmierbaren Prozessor umfassen.

Das Gerät kann beispielsweise jeweils zusätzlich noch eine weitere oder mehrere weitere Komponente/n umfassen, wie beispielsweise einen weiteren Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Zum besseren Verständnis der Erfindung wird diese noch im Zusammenhang mit der Fig. 3 erläutert, die als Energiespeicher 110 bespielhaft einen Kondensator umfasst bzw. verwendet.

In anderen Varianten kann der Energiespeicher beispielsweise als thermischer oder elektrochemischer Speicher realisiert sein.

Die gespeicherte Energie des Kondensators wird in diesem Ausführungsbeispiel über die elektrische Spannung bestimmt. Die Fig 3 zeigt dabei, ein Diagramm für die elektrische Spannung U des Kondensators als Energiespeichers 110 über eine Zeit t. Der programmierbare Prozessor P wird beispielsweise zum Zeitpunkt t0 eingeschaltet und zum Zeitpunkt t1 ausgeschaltet und in der Zeit zwischen t0 und t1 wird der Kondensator 110 geladen. Nach dem Ausschalten zum Zeitpunkt t1 wird der Kondensator 110 gemäß eines Entladeprofils, das z. B. durch die Konfiguration bestimmt ist oder durch die Hardwarekonfiguration des Kondensators bestimmt ist, entladen. Der Verlauf der elektrischen Spannung des Kondensators ist als die Kurve U_C dargestellt.

Das Entladeprofil des Kondensators mittels einer Hardwarekonfiguration kann dabei beispielsweise durch die Eigenschaften eines gewählten Kondensators (z. B. die Faradzahl) und/oder eines gewählten Widerstandes (z. B. die Ohmzahl) des Energiespeichers 110 bestimmt werden.

Nachdem der programmierbare Prozessor P ausgeschaltet ist, entlädt sich der Kondensator 110 entsprechend seines Entladeprofil. Wird der programmierbare Prozessor eingeschaltet liest das Startsteuerungsmodul 130 die elektrische Spannung U_C zu dem entsprechenden Zeitpunkt aus und vergleicht diese mit dem vorgegebenen Schwellwert U_S. Überschreitet die elektrische Spannung U_C den Schwellwert U_S, so wird der Start des programmierbaren Prozessors, z. B. um die Zeit verzögert, die benötigt wird bis die elektrische Spannung U_C des Kondensators 110 unter den Schwellwert U_S gefallen ist. Da beispielsweise das Entladeprofil bekannt ist, kann die dafür nötige Verzögerungszeit anhand der gemessenen elektrischen Spannung U_C und des Entladeprofiles ermittelt werden. Zusätzlich zur Verzögerung wird beispielhaft ein Zähler für erkannte aufeinanderfolgende Neustarts erhöht.

Wird also beispielsweise der programmierbare Prozessor zum Zeitpunkt t2 gestartet, überschreitet die elektrische Spannung U_C den Schwellwert U_S. Das Startsteuerungsmodul 130 ermittelt dies, indem es z. B. den Schwellwert U_S mit der zum Zeitpunkt t2 gemessenen elektrischen Spannung U_C vergleicht. Anhand der Differenz zwischen der gemessenen elektrischen Spannung U_C und dem Schwellwert U_S wird unter Berücksichtigung des Entladeprofiles der Zeitpunkt ermittelt, wann die elektrische Spannung U_C des Kondensators den Schwellwert U_S unterschreitet. Dies ist beispielsweise der Zeitpunkt t3. Ist die dafür notwendige Verzögerungszeit abgelaufen, um einen Start zum ermittelten Zeitpunkt zu gewährleisten, so wird zu dem ermittelten Zeitpunkt (z. B. t3) der Start des programmierbaren Prozessors P erlaubt oder fortgesetzt. Diese Informationen, wie z. B. die notwendige Verzögerungszeit oder ob der Schwellwert überschritten wurde oder unterschritten wurde, wird in dem Prüfergebnis gespeichert. Der Prozessor bzw. das Startsteuerungsmodul steuert dann anhand der im Prüfergebnis gespeicherten Informationen den Start des Prozessors - so wie hier erläutert.

Wird beispielsweise der programmierbare Prozessor nach dem Zeitpunkt t3 eingeschaltet, so wird beispielsweise ermittelt, dass die elektrischen Spannung U_C des Kondensators 110 unterhalb des Schwellwertes U_S liegt. Auch dies wird im Prüfergebnis gespeichert. Das Startsteuermodul führt in diesem Fall den Start des programmierbaren Prozessors ohne eine Nutzung einer Verzögerungszeit aus. Mit anderen Worten wird der programmierbare Prozessor unverzögert gestartet.

Wird also nun z. B. zum Zeitpunkt t4 der Prozessor eingeschaltet, so wird also der programmierbare Prozessor unverzögert gestartet.

In einer Variante der Erfindung ist es beispielsweise möglich, dass der Schwellwert U_S anhand der elektrischen Spannung U_C beim letzten Ausschalten des programmierbaren Prozessors bestimmt wird. Beispielsweise wird der Schwellwert derart bestimmt, dass eine vorgegebene Mindestzeitdauer zwischen dem Ausschalten und dem Einschalten des programmierbaren Prozessors vergangen ist. Um diese Mindestzeitdauer zu berechnen, wird der Schwellwert U_S anhand der elektrischen Spannung U_C beim letzten Ausschalten unter Berücksichtigung des Entladeprofils berechnet. Alternativ kann beispielsweise der Schwellwert U_S anhand der elektrischen Spannung U_C beim letzten Ausschalten des programmierbaren Prozessors unter Verwendung einer relativen Entladung des Kondensators 110 ermittelt werden. Dies kann beispielsweise dadurch erfolgen, dass der Schwellwert U_S 80 % der elektrischen Spannung U_C beim letzten Ausschalten beträgt.

Mit der Erfindung können beispielsweise implementierungsbezogene Gegenmaßnahmen realisiert werden, um z. B. Seitenkanalangriffe durch eine Verzögerung von aufeinanderfolgenden AES Operationen/Entschlüsselungen zu erschweren.

Bezogen auf eine Entschlüsselung eines Bitstreams durch einen FPGA, wobei die Entschlüsselung z. B. nur bei einem Neustart des Geräts aktiv ist, um den Bitstream initial zu laden, kann eine Boot-Verzögerung die Dauer eines erfolgreichen Angriffs signifikant erhöhen.

Beispielsweise wird bei einer DPA (Differential Power Analysis) eine große Menge an Messungen von Entschlüsselungsvorgängen benötigt, um eine relevante Korrelation zu vertraulichen Daten (z. B. dem Schlüssel für die Entschlüsselung) zu bekommen.

Der Angreifer hat z. B. in diesem Szenario nur durch einen Neustart des Geräts die Möglichkeit einen neuen Entschlüsselungsvorgang zu triggern.

Durch die Erfindung wird sichergestellt, dass die Zeit zwischen Aus- und wieder Einschalten des programmierbaren Prozessors (z. B ein FPGAs) einen einstellbaren Mindestwert (der Schwellwert U_S) nicht unterschreitet. Dies wird z. B. erreicht werden, indem in einem FPGA der Energiespeicher installiert wird, der z. B. nach jedem Neustart des FPGAs aufgeladen wird. Nach Ausschalten des FPGAs wird der Energiespeicher kontrolliert mit einer bestimmten vorgegebenen Geschwindigkeit (z. B. entsprechend des Entladeprofils) entladen. Überschreitet die gespeicherte Energie des Energiespeichers beim Einschalten den Schwellwert, so wird der ordnungsgemäße Neustart des FPGAs blockiert oder verzögert. Ein Angreifer muss beispielsweise eine bestimmte Zeit warten, bis der Energiespeicher weit genug entladen ist und das FPGA neu starten kann, um die Seitenkanalanalyse durchzuführen. Dies erschwert insbesondere einen Seitenkanalangriff erheblich.

In einer weiteren Variante des programmierbaren Prozessors kann z. B. durch Brennen von eFuses bestimmt werden, wie lange gewartet werden muss, bis der programmierbare Prozessor wieder ordnungsgemäß startet.

In einer weiteren Variante kann auch die Anzahl an hintereinander auftretenden "zu schnellen" Neustarts mitgezählt werden, um nach Überschreitung einer vorgegebenen Anzahl von diesen "zu schnellen" Neustarts einen Fehlercode auszugeben, den Start komplett zu blockieren oder den verwendeten AES Schlüssel zu löschen.

Ein weiteres Ausführungsbeispiel wird im Zusammenhang mit der Fig. 4 erläutert, die als Energiespeicher 110 bespielhaft einen Kondensator umfasst bzw. verwendet.

Die gespeicherte Energie des Kondensators wird in diesem Ausführungsbeispiel z. B. über die elektrische Spannung bestimmt. Die Fig 4 zeigt dabei, ein Diagramm für die elektrische Spannung U des Kondensators als Energiespeichers 110 über eine Zeit t. Der programmierbare Prozessor P wird beispielsweise zum Zeitpunkt t0 eingeschaltet und es wird z. B. der Startvorgang des programmierbaren Prozessors P (z. B. ein Bootprozess) durchgeführt. Nach dem Einschalten des programmierbaren Prozessors P wird der Energiespeicher vorzugsweise so lange geladen bis ein Triggerereignis eintritt. Ein Triggerereignis kann z. B. ein Ausführen vorgegebener Funktionen sein und/oder ein Auslösen eines vorgegebenen Interrupts und/oder ein Ablaufen eines vorgegebenen Zeitraums (Timer) und/oder ein Ausführen einer sicherheitskritischen Funktion sein.

Zum Zeitpunkt t1 tritt beispielsweise ein Triggerereignis in Form einer Verwendung einer sicherheitskritischen Funktion ein (z. B. Bitstream Entschlüsselung). Nachdem z. B. die Ausführung dieser sicherheitskritischen Funktion abgeschlossen ist, wird z. B. der Ladeprozess beendet und/oder der Energiespeicher wird wieder kontrolliert entladen. Ein Feldgerät mit dem programmierbaren Prozessor fährt z. B. mit dem Startvorgang fort und arbeitet anschließend im Normalbetrieb (insbesondere arbeitet auch der programmierbare Prozessor P dann auch im Normalbetrieb). Während dieses Normalbetriebs wird der Energiespeicher vorzugsweise weiter entladen (z. B. unter Berücksichtigung bzw. entsprechend des Entladeprofils).

Zum Zeitpunkt t2 ist der Energiespeicher beispielsweise vollständig entladen und das Feldgerät und/oder der Prozessor werden weiter im Normalbetrieb betrieben.

Zum Zeitpunkt t3 wird das Feldgerät bzw. der programmierbare Prozessor neu gestartet. Der Energiespeicher wird wieder geladen bzw. kontrolliert geladen.

Zum Zeitpunkt t4 tritt ein Triggerereignis in Form einer Verwendung der sicherheitskritischen Funktion ein. (z. B. Bitstream Entschlüsselung). Nachdem z. B. die Ausführung dieser sicherheitskritischen Funktion abgeschlossen ist, wird z. B. der Ladeprozess bzw. das Laden des Energiespeichers beendet und/oder der Energiespeicher wird wieder kontrolliert entladen.

Zum Zeitpunkt t5 erfolgt beispielsweise ein Neustart bevor sich der Energiespeicher vollständig entladen hat. Die gespeicherte Energie U_C überschreitet zu diesem Zeitpunkt noch nicht den vorgegebenen Schwellwert U_S. (Mit anderen Worten unterschreitet die gespeicherte Energie U_C den vorgegebenen Schwellwert U_S). Hierzu wird ggf. der gespeicherte Energie U_C bestimmt und mit vorgegebenen Schwellwert U_S verglichen. Wird der Schwellwert nicht überschritten bzw. unterschritten so wird der Startvorgang normal fortgesetzt und der Energiespeicher wird weiter geladen.

Zum Zeitpunkt t6 tritt ein Triggerereignis in Form einer weiteren Verwendung der sicherheitskritischen Funktion ein. (z. B. Bitstream Entschlüsselung). Nachdem z. B. diese Verwendung der sicherheitskritischen Funktion abgeschlossen ist, wird z. B. der Ladeprozess bzw. das Laden des Energiespeichers beendet und/oder der Energiespeicher wird wieder kontrolliert entladen.

Zum Zeitpunkt t7 wird der programmierbare Prozessor P bzw. das Feldgerät neu gestartet bevor der Energiespeicher vollständig entladen ist oder die gespeicherte Energie U_C unter den Schwellwert U_S gefallen ist. Mit anderen Worten ist der Neustart zu schnell erfolgt, sodass eine Entladung des Energiespeichers auf ein Niveau der gespeicherte Energie U_C unterhalb des vorgegebenen Schwellwertes U_S nicht erfolgen konnte. Es ist also keine derartige Entladung erfolgt, dass ein unterschreiten der gespeicherte Energie U_C des vorgegebenen Schwellwertes U_S erreicht wurde.

Hierdurch können z. B. schnell aufeinanderfolgende Neustarts erkannt werden, die z. B. von einem Angreifer dazu verwendet werden können, um mittels eines Seitenkanalangriffs kryptographische Daten zu ermitteln.

Wird ein derart schneller Neustart erkannt, wird beispielsweise ein Steuersignal ausgelöst oder bereitgestellt, der z. B. den Neustart verzögert. Mit anderen Worten wird das Steuersignal ausgelöst, wenn beim Einschalten der Wert der gespeicherte Energie U_C den vorgegebenen Schwellwert U_S überschreitet.

Auch die anderen Varianten und Ausführungsbeispiele aus den Fig. 1-3 lassen sich auf dieses Ausführungsbeispiel übertragen.

Das Triggerereignis und/oder die Konfiguration wann der Energiespeicher geladen wird und/oder wann der Energiespeicher entladen wird und/oder das Steuersignal und/oder der Schwellwert U_S sind beispielsweise in der Konfiguration umfasst bzw. gespeichert. Die Konfiguration kann dabei z. B. als Datensatz oder Datenstruktur realisiert sein, die unveränderbar (schreibgeschützt) in dem programmierbaren Prozessor bzw. durch diesen gespeichert ist.

Diese Variante ermöglicht es z. B. ohne zusätzliche Logik, eine bestimmte Anzahl von zulässigen Neustarts festzulegen, bevor ein Steuersignal ausgelöst wird. (z. B. 1 Neustart erlaubt; 2 Neustarts schnell hintereinander nicht)

Die Fig. 2 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein Verfahren zum rechnergestützten oder computerimplementierten Starten eines Prozessors dargestellt. Das Starten ist insbesondere ein gesichertes Starten.

Das Verfahren umfasst einen ersten Verfahrensschritt 210 zum Speichern oder zum Laden einer Konfiguration zum Laden und/oder zum Entladen eines Energiespeichers eines programmierbaren Prozessors, wobei der programmierbare Prozessor P das Laden des Energiespeichers anhand der Konfiguration steuert.

Das Verfahren umfasst einen zweiten Verfahrensschritt 220 zum Bestimmen der gespeicherten Energie des Energiespeichers bei einem Start des programmierbaren Prozessors, wobei die bestimmte gespeicherte Energie mit einem vorgegebenen Schwellwert verglichen wird und anhand des Vergleichens ein Prüfergebnis ermittelt wird und wobei abhängig von dem Prüfergebnis der Start des programmierbaren Prozessors um eine Verzögerungszeit verzögert wird.

Die Erfindung betrifft ein Verfahren und einen Prozessor, der durch seinen spezifischen Aufbau eine Zeitverzögerung beim Starten des Prozessors nutzt, um Seitenkanalangriffe zu erschweren.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Programmierbarer Prozessor (P), beispielsweise ein FPGA, aufweisend:
- ein Energiespeicher (110);
- ein Konfigurationsmodul (120), wobei
∘ das Konfigurationsmodul (120) dazu eingerichtet ist eine Konfiguration zum Laden und/oder zum Entladen des Energiespeichers (110) zu speichern und/oder zu laden;
- ein Startsteuerungsmodul (130), wobei
∘ das Startsteuerungsmodul (130) dazu eingerichtet ist die gespeicherte Energie (U_C) des Energiespeichers (110) bei einem Start des programmierbaren Prozessors (P) zu bestimmen,
∘ das Startsteuerungsmodul (130) die bestimmte gespeicherte Energie (U_C) mit einem vorgegebenen Schwellwert (U_S) vergleicht und anhand des Vergleichens ein Prüfergebnis ermittelt,
∘ abhängig von dem Prüfergebnis der Start des programmierbaren Prozessors (P) um eine Verzögerungszeit verzögert wird.

2. Programmierbarer Prozessor (P) nach dem vorhergehenden Anspruch, wobei das Prüfergebnis die Differenz zwischen der bestimmten gespeicherten Energie (U_C) und des vorgegebenen Schwellwertes (U_S) umfasst.

3. Programmierbarer Prozessor (P) nach einem der vorhergehenden Ansprüche, wobei
- der Energiespeicher (110) einen Kondensator und/oder einen Widerstand umfasst oder
- der Energiespeicher (110) eine Batterie und/oder einen Widerstand umfasst oder
- der Energiespeicher (110) einen Kondensator und/oder einen oder mehrere Transistoren umfasst.

4. Programmierbarer Prozessor (P) nach einem der vorhergehenden Ansprüche, wobei mittels des Konfigurationsmoduls die Konfiguration festlegbar ist.

5. Programmierbarer Prozessor (P) nach einem der vorhergehenden Ansprüche, wobei
- die Konfiguration eine vorgegebene Anzahl von Starts des programmierbaren Prozessors (P) vorgibt, die den vorgegebenen Schwellwert (U_S) überschreiten dürfen, und/oder
- die vorgegebene Anzahl der Starts direkt hintereinander ausgeführte Starts des programmierbaren Prozessors (P) sind, und/oder
- bei einem Überschreiten der vorgegebenen Anzahl der Starts vorgegebene Steuerbefehle ausgeführt werden.

6. Programmierbarer Prozessor (P) nach Anspruch 5, wobei
- die Steuerbefehle vorgegebene Daten des programmierbaren Prozessors (P) löschen, und/oder
- die Steuerbefehle den Start des programmierbaren Prozessors (P) unterbrechen, und/oder
- die Steuerbefehle einen Fehlercode bereitstellen.

7. Programmierbarer Prozessor (P) nach einem der vorhergehenden Ansprüche, wobei
- die Konfiguration eine Dauer der Verzögerungszeit vorgibt, und/oder
- die Konfiguration vorgibt, wie hoch die Verzögerungszeit abhängig von dem Prüfergebnis und/oder von der Differenz ist.

8. Programmierbarer Prozessor (P) nach einem der vorhergehenden Ansprüche, wobei die Konfiguration schreibgeschützt und/oder einmalig durch das Konfigurationsmodul (120) gespeichert wird.

9. Programmierbarer Prozessor (P) nach einem der vorhergehenden Ansprüche, wobei
- die Verzögerungszeit ein fest vorgegebener Wert ist oder
- anhand eines Zufallswertes die Verzögerungszeit bestimmt wird.

10. Programmierbarer Prozessor (P) nach Anspruch 9, wobei der Zufallswert durch ein zufälliges Brennen von Schaltungen individuell für den programmierbaren Prozessor (P) bestimmt wird.

11. Programmierbarer Prozessor (P) nach einem der vorhergehenden Ansprüche, wobei
- die Konfiguration ein Entladeprofil für eine Selbstentladung des Energiespeichers (110) vorgibt,
- die Selbstentladung beispielsweise nach einem Ausschalten des programmierbaren Prozessors (P) erfolgt.

12. Programmierbarer Prozessor (P) nach einem der vorhergehenden Ansprüche, wobei
- das Startsteuerungsmodul (130) dazu eingerichtet ist anhand der bestimmten gespeicherten Energie (U_C) und/oder des Entladeprofils einen Ausschaltzeitpunkt des programmierbaren Prozessors (P) zu berechnen, und/oder
- das Startsteuerungsmodul (130) eine Startzeitdifferenz zwischen einem Einschaltzeitpunkt und dem Ausschaltzeitpunkt ermittelt und im Prüfergebnis speichert, und/oder
- die Verzögerungszeit anhand der Startzeitdifferenz ermittelt wird, beispielsweise wenn die Startzeitdifferenz die Verzögerungszeit nicht einhält.

13. Computerimplementiertes Verfahren mit folgenden Verfahrensschritten:
∘ Speichern (210) einer Konfiguration zum Laden und/oder zum Entladen eines Energiespeichers (110) eines programmierbaren Prozessors;
- Bestimmen (220) der gespeicherten Energie (U_C) des Energiespeichers (110) bei einem Start des programmierbaren Prozessors (P), wobei
∘ die bestimmte gespeicherte Energie (U_C) mit einem vorgegebenen Schwellwert (U_S) verglichen wird und anhand des Vergleichens ein Prüfergebnis ermittelt wird,
∘ abhängig von dem Prüfergebnis der Start des programmierbaren Prozessors (P) um eine Verzögerungszeit verzögert wird.

14. Computerprogrammprodukt mit Programmbefehlen zur Durchführung des Verfahrens nach Anspruch 13.

15. Bereitstellungsvorrichtung für das Computerprogrammprodukt nach Anspruch 14, wobei die Bereitstellungsvorrichtung das Computerprogrammprodukt speichert und/oder bereitstellt.
